# FASCICULE DE BREVET EUROPEEN

(11) **EP 4 159 097 B1**
(45) Date de publication et mention de la délivrance du brevet: **01.05.2024**
(21) Numéro de dépôt: 22198392.7
(22) Date de dépôt: 28.09.2022
(51) Int. Cl.: A47J 45/07

(54) **ENSEMBLE FORMÉ PAR UN RÉCIPIENT DE CUISSON MUNI D'UNE ANSE ET UNE POIGNÉE AMOVIBLE**
ANORDNUNG AUS EINEM KOCHGEFÄSS MIT EINEM GRIFF UND EINEM ABNEHMBAREN GRIFF
ASSEMBLY FORMED BY A COOKING CONTAINER PROVIDED WITH A HANDLE AND A REMOVABLE HANDLE

(30) Priorité: 04.10.2021 FR 2110468
(43) Date de publication de la demande: 05.04.2023
(73) Titulaire: SEB S.A., 69130 Ecully (FR)
(72) Inventeur: MONTGELARD, Michel, 69134 Ecully Cedex (FR); LORTHIOIR, Christophe, 69134 Ecully Cedex (FR)
(74) Mandataire: SEB Développement

(56) Documents cités:
- EP-B1- 1 476 064
- DE-A1- 2 510 894
- JP-U- 3 074 472
- KR-B1- 100 927 708

## Description

### Domaine technique

La présente invention concerne le domaine technique général des récipients de cuisson et des poignées amovibles, la poignée amovible étant destiné à coopérer avec le récipient de cuisson qui présente au moins une anse recourbée vers l'extérieur. L'anse comporte une ouverture traversante et la poignée amovible comporte un bec se terminant par un double cambrage susceptible d'être introduit dans l'ouverture.

### Etat de la technique

Il est connu du document EP3569119 un ensemble formé par un récipient de cuisson comprenant au moins une anse recourbée vers l'extérieur ainsi qu'une poignée amovible destinée à coopérer avec l'anse. L'anse comporte une extrémité libre et une ouverture traversante munie d'une paroi avant. La poignée amovible s'étend selon un axe longitudinal et comporte à une extrémité un bec se terminant par un double cambrage susceptible d'être introduit dans ladite ouverture. Le bec est muni d'une paroi d'appui inférieure qui est destinée à coopérer avec une face d'appui supérieure de l'anse. La poignée comporte un dispositif de verrouillage comprenant un verrou mobile en translation suivant l'axe longitudinal entre une position d'accouplement dans laquelle la poignée est assemblée sur l'anse et une position de désaccouplement dans laquelle la poignée peut être désassemblée de l'anse. Dans la position d'accouplement, le verrou comporte une paroi inclinée d'un angle θ par rapport à un plan horizontal passant par l'axe longitudinal, qui exerce un effort sur l'extrémité libre de l'anse pour plaquer la face d'appui supérieure contre la paroi d'appui inférieure selon un axe perpendiculaire à l'axe longitudinal.

Une telle construction permet de limiter les jeux entre la poignée et l'anse lorsque l'utilisateur agite l'ensemble selon une direction verticale. Cependant, une telle construction ne permet pas de limiter les jeux latéraux entre la poignée et l'anse lorsque l'utilisateur agite l'ensemble selon une direction horizontale notamment latérale ou avant/arrière. De tels jeux sont source d'inquiétude pour l'utilisateur.

De plus, l'utilisateur perçoit l'ensemble comme de mauvaise qualité.

Le document JP-U-3074472 décrit un ensemble selon le préambule de la revendication indépendante 1.

### Résumé de l'invention

La présente invention vise à remédier à ces inconvénients.

Le problème technique à la base de l'invention consiste à proposer un ensemble formé par un récipient de cuisson et une poignée amovible présentant une ergonomie optimisée pour permettre à l'utilisateur de la manipuler facilement, en toute sécurité.

Un autre but de l'invention est de proposer un ensemble formé par un récipient de cuisson et une poignée amovible qui présente une conception simple et économique à mettre en oeuvre.

A cet effet, l'invention a pour objet un ensemble formé par un récipient de cuisson comprenant au moins une anse recourbée vers l'extérieur ainsi qu'une poignée amovible destinée à coopérer avec ladite anse, ladite anse comportant une extrémité libre et une ouverture traversante munie d'une paroi avant, ladite poignée amovible s'étendant selon un axe longitudinal et comportant à une extrémité un bec se terminant par un double cambrage susceptible d'être introduit dans ladite ouverture, ledit bec étant muni d'une paroi d'appui inférieure destinée à coopérer avec une face d'appui supérieure de l'anse, caractérisé en ce que l'anse comporte un logement agencé à proximité de l'extrémité libre et en ce que le bec comporte un bossage agencé sur la face d'appui inférieure et qui s'étend selon une direction principale horizontale, perpendiculaire à l'axe longitudinal, le bossage et le logement étant dimensionnés pour amener le double cambrage en contact avec la paroi avant de l'ouverture lorsque la poignée est assemblée sur l'anse.

Par le bossage s'étend selon une direction principale horizontale, perpendiculaire à l'axe longitudinal, on comprend que le logement s'étend également selon une direction principale horizontale, perpendiculaire à l'axe longitudinal lorsque la poignée est assemblée sur l'anse.

Ainsi, la paroi avant de l'ouverture de l'anse forme une première zone d'appui pour le double cambrage du bec et le logement forme une deuxième zone d'appui pour le bossage agencé sur le bec. Dans un plan sensiblement horizontal passant par l'axe longitudinal, le bec est immobilisé sans jeu sur l'anse. Si l'utilisateur agite l'ensemble selon une direction horizontale, il ne percevra aucun déplacement entre la poignée et le récipient de cuisson. L'absence de mouvement relatif entre l'anse et la poignée lors des manipulations du récipient de cuisson permet d'améliorer l'ergonomie et la qualité perçue par l'utilisateur.

Le positionnement de la poignée sur le récipient de cuisson, dans un plan sensiblement horizontal passant par l'axe longitudinal, n'est réalisé que par deux pièces : l'anse et le bec. Ainsi les chaines de cotes qui définissent les jeux sont courtes et les jeux faciles à maitriser.

Avantageusement, le bossage comporte une face arrière et le logement comporte une paroi arrière, la face arrière étant en appui contre la paroi arrière lorsque la poignée est assemblée sur l'anse, pour amener le double cambrage en contact avec la paroi avant de l'ouverture.

Le bec et l'anse étant réalisés de préférence dans des matériaux métalliques, la cote entre le double cambrage et la face arrière du bossage pour le bec et la cote entre la paroi avant de l'ouverture et la paroi arrière du logement pour l'anse sont parfaitement maitrisées. Ainsi, dans un plan sensiblement horizontal passant par l'axe longitudinal, le bec est immobilisé sur l'anse sans jeu ou avec un minimum de jeu.

Avantageusement, le bossage comporte une extrémité libre arrondie dans un plan de coupe transversal.

Une telle disposition permet de faciliter l'introduction du bossage dans le logement lors de l'assemblage de la poignée sur l'anse.

De préférence, l'ouverture s'étend selon une direction principale horizontale, de manière parallèle à la direction principale d'extension du logement.

Ainsi, la première zone d'appui entre la paroi avant de l'ouverture de l'anse et le double cambrage du bec et la deuxième zone d'appui entre le logement et le bossage prennent la forme de deux segments parallèles qui empêchent toute rotation du bec par rapport à l'anse dans un plan horizontal.

Avantageusement, le logement est formé par une ouverture traversante.

Ainsi, le logement est agencé sur l'anse de manière traversante.

La réalisation du logement formé par une ouverture traversante, notamment lorsque l'anse est réalisée à partir d'un feuillard métallique par découpe et pliage, permet de maitriser parfaitement la cote entre la paroi avant de l'ouverture et la paroi arrière du logement.

De préférence, la face arrière du bossage comporte une face plane inclinée par rapport à une direction perpendiculaire à l'axe longitudinal, dans un plan de coupe vertical et la paroi arrière du logement comporte une arête qui s'étend selon une direction perpendiculaire à l'axe longitudinal et contenue dans un plan horizontal, la face plane inclinée glissant sur l'arête pour amener le double cambrage en contact avec la paroi avant de l'ouverture lorsque la poignée est assemblée sur l'anse.

Le double cambrage du bec est introduit dans l'ouverture par le dessus pour s'assembler sur l'anse par basculement autour d'un axe de pivotement, transversal à l'axe longitudinal et compris dans un plan horizontal. Ainsi, en fin d'assemblage, la face plane inclinée de la face arrière du bossage va prendre appui sur l'arête de la paroi arrière du logement pour faire glisser le double cambrage jusqu'au contact avec la paroi avant de l'ouverture.

De préférence, le logement présente une forme en V dans un plan de coupe transversal, le logement en forme de V comportant une ouverture supérieure de réception du bossage.

Un tel logement permet de garder une bonne rigidité de l'extrémité libre de l'anse.

De manière avantageuse, la paroi arrière du logement comporte une face plane inclinée par rapport à une direction perpendiculaire à l'axe longitudinal, dans un plan de coupe vertical et la face arrière du bossage comporte une arête qui s'étend selon une direction perpendiculaire à l'axe longitudinal et contenue dans un plan horizontal, l'arête glissant sur la face plane inclinée pour amener le double cambrage en contact avec la paroi avant de l'ouverture lorsque la poignée est assemblée sur l'anse.

Le double cambrage du bec est introduit dans l'ouverture par le dessus pour s'assembler sur l'anse par basculement autour d'un axe de pivotement, transversal à l'axe longitudinal et compris dans un plan horizontal. Ainsi, en fin d'assemblage, l'arête de la face arrière du bossage va prendre appui sur la face plane inclinée de la paroi arrière du logement pour faire glisser le double cambrage jusqu'au contact avec la paroi avant de l'ouverture.

Avantageusement, la poignée comporte un dispositif de verrouillage comprenant un verrou mobile en translation suivant l'axe longitudinal entre une position d'accouplement dans laquelle la poignée est assemblée sur l'anse et une position de désaccouplement dans laquelle la poignée peut être désassemblée de l'anse.

De préférence, dans la position d'accouplement, le verrou comporte une paroi inclinée d'un angle θ par rapport à un plan horizontal passant par l'axe longitudinal, qui exerce un effort sur l'extrémité libre de l'anse pour plaquer la face d'appui supérieure contre la paroi d'appui inférieure selon une direction perpendiculaire à l'axe longitudinal et pour maintenir le bossage engagé dans le logement.

La paroi inclinée permet de pincer l'anse dans la position d'accouplement et ainsi de supprimer les jeux verticaux, une fois la poignée agencée sur l'anse. La paroi inclinée permet également de maintenir le bossage engagé dans le logement pour supprimer les jeux latéraux. L'absence de mouvement relatif entre l'anse et la poignée lors des manipulations du récipient de cuisson permet d'améliorer l'ergonomie et la qualité perçue par l'utilisateur.

Avantageusement, le récipient de cuisson est une poêle, une casserole ou une sauteuse

### Brève description des figures

On comprendra mieux les buts, aspects et avantages de la présente invention, d'après la description donnée ci-après de deux modes particuliers de réalisation de l'invention présenté à titre d'exemple non limitatif, en se référant aux dessins annexés dans lesquels :
La figure 1 est une vue d'ensemble en perspective d'un ensemble formé par un récipient de cuisson comprenant une anse et une poignée amovible selon un premier mode particulier de réalisation de l'invention.
La figure 2 est une vue en perspective du dessous de la poignée amovible de la figure 1 et une vue en perspective du dessus du récipient de cuisson muni de l'anse de la figure 1.
La figure 3 est une vue en coupe suivant le plan de coupe vertical suivant la ligne III-III de l'ensemble illustré sur la figure 1.
La figure 4 est une vue d'ensemble en perspective d'un ensemble formé par un récipient de cuisson comprenant une anse et une poignée amovible selon un deuxième mode particulier de réalisation de l'invention.
La figure 5 est une vue en perspective du dessous de la poignée amovible de la figure 4 et une vue en perspective du dessus du récipient de cuisson muni de l'anse de la figure 4.
La figure 6 est une vue en coupe suivant le plan de coupe vertical suivant la ligne VI-VI de l'ensemble illustré sur la figure 3.

Seuls les éléments nécessaires à la compréhension de l'invention ont été représentés. Pour faciliter la lecture des dessins, les mêmes éléments portent les mêmes références d'une figure à l'autre.

On notera que dans ce document, les termes "horizontal", "vertical", "inférieur", "supérieur", "haut", "bas", "avant", "arrière", "longitudinal", "transversal", employés pour décrire l'ensemble font référence à cet ensemble reposant sur un plan de travail, en situation d'usage, lorsque la poignée est assemblée sur l'anse du récipient de cuisson.

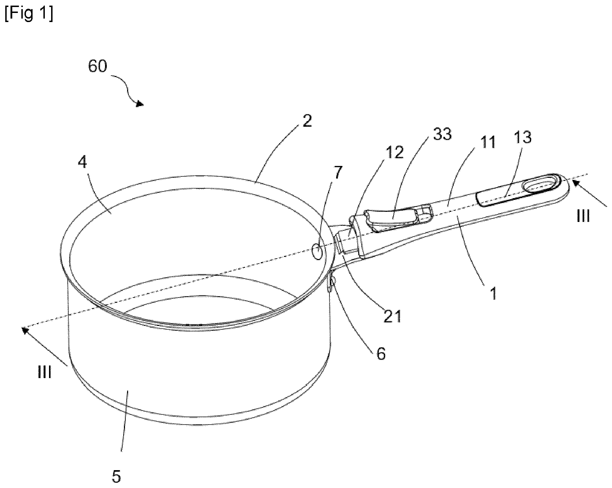

Tel que visible aux figures 1 à 6, un ensemble 60 est formé par un récipient de cuisson 2 et une poignée 1 amovible. Le récipient de cuisson 2 comporte une calotte 4 munie d'une paroi latérale 5 sur laquelle est rapportée une anse 21. L'anse 21 est fixée sur la paroi latérale 5 notamment par deux rivets 6, 7. L'anse 21 est réalisée à partir d'un feuillard métallique par découpe et pliage. L'anse 21 s'étend selon une direction d'extension radiale par rapport à la paroi latérale 5 dans un plan sensiblement horizontal, parallèle au plan de pose de la calotte 4. L'anse 21 comporte une extrémité libre 27. L'anse 21 comporte une ouverture 22 traversante et sensiblement rectangulaire. L'ouverture 22 s'étend selon une direction principale perpendiculaire à la direction d'extension radiale. L'ouverture 22 comporte une paroi avant 24.

La poignée 1 amovible s'étend selon un axe longitudinal 13. L'axe longitudinal 13 s'étend selon une même direction que la direction d'extension radiale de l'anse 21 lorsque la poignée 1 est assemblée sur l'anse 21. La poignée 1 comprend à une extrémité un bec 12 qui se termine par un double cambrage 18 destiné à coopérer avec l'ouverture 22 pour assembler ou désassembler la poignée 1 de l'anse 21. Le bec 12 est réalisé à partir d'un feuillard métallique par découpe et pliage. Le double cambrage 18 comporte une arête avant 19 qui est destinée à coopérer avec la paroi avant 24 de l'ouverture 22, notamment une arête inférieure de la paroi avant 24. La poignée 1 comporte un corps de préhension 11 qui permet une fois la poignée 1 assemblée sur l'anse 21 de manipuler le récipient de cuisson 2.

Le double cambrage 18 du bec 12 est introduit dans l'ouverture 22 par le dessus pour s'assembler sur l'anse 21 par basculement autour d'un axe de pivotement 14, transversal à l'axe longitudinal 13 et compris dans un plan horizontal. Le bec 12 comporte une face supérieure d'extrémité 15 qui coopère avec une face inférieure 23 de l'anse 21 pour former un premier appui antérieur à l'axe de pivotement 14. Le bec 12 comporte une paroi d'appui inférieure 16 qui coopère avec une face d'appui supérieure 26 de l'anse 21 pour former un deuxième appui postérieur à l'axe de pivotement 14. Ainsi lors de la manipulation par l'utilisateur, le poids du récipient de cuisson 2 crée un couple autour de l'axe de pivotement 14 qui génère un premier effort sur le premier appui et un deuxième effort sur le deuxième appui de direction opposée.

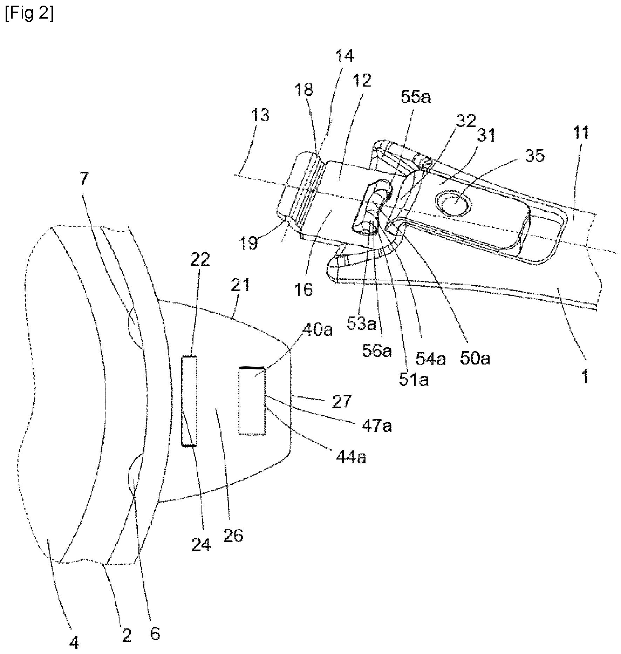

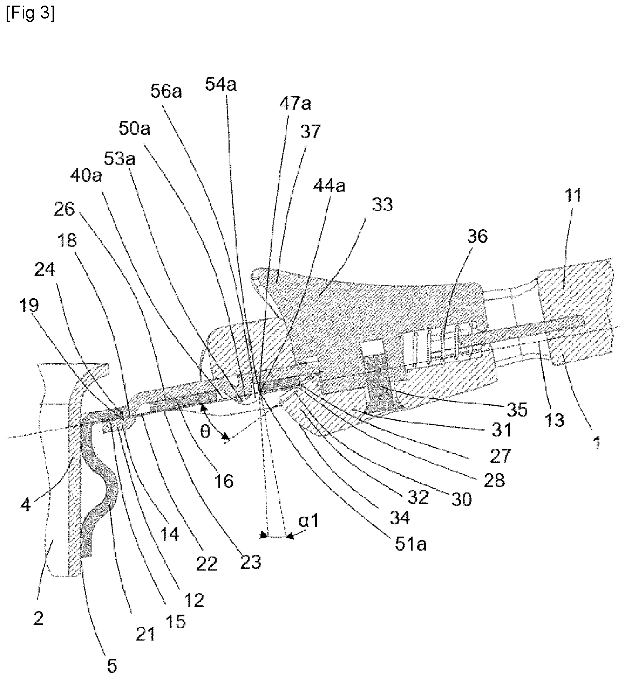

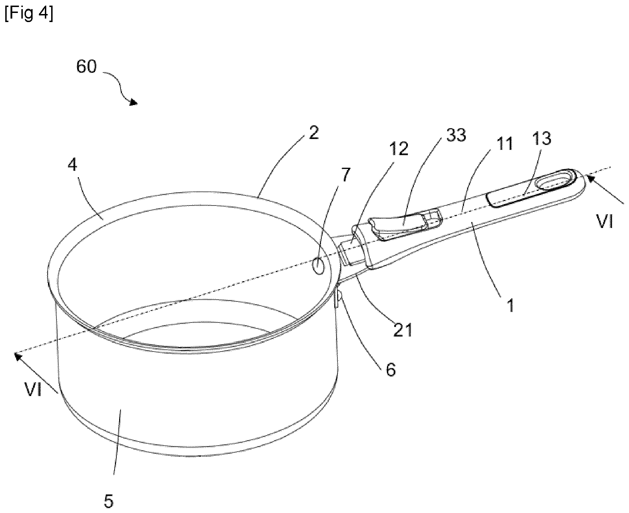

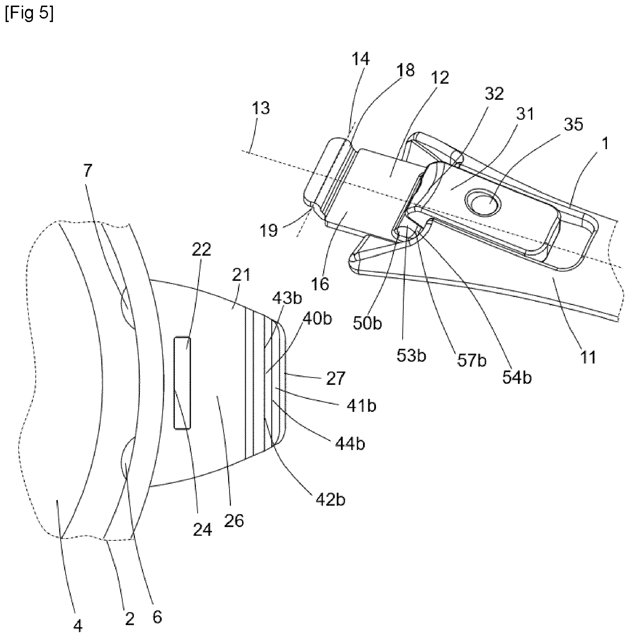

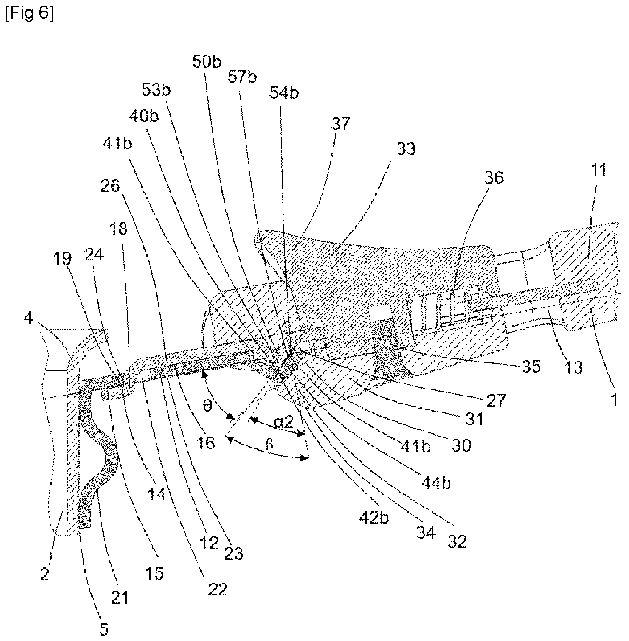

Conformément aux figures 3 et 6, la poignée 1 comporte un dispositif de verrouillage comprenant un verrou 31 mobile en translation suivant l'axe longitudinal 13. Le verrou 31 est mobile entre une position d'accouplement dans laquelle la poignée 1 est assemblée sur l'anse 21 (fig.1 et fig. 4) et une position de désaccouplement (fig.2 et fig. 5) dans laquelle la poignée 1 peut être désassemblée de l'anse 21. Le verrou 31 comporte une extrémité avant 32 qui est glissée sous la face inférieure 23 de l'anse 21 dans la position d'accouplement. Un bouton de manoeuvre 33 est agencé sur le corps de préhension 11. Le bouton de manoeuvre 33 est fixé sur le verrou 31 par l'intermédiaire d'une vis 35 pour permettre la commande du verrou 31.

Un ressort 36 de rappel est agencé dans le corps de préhension 11 pour rappeler le verrou 31 en position d'accouplement. L'extrémité avant 32 du verrou 31 comporte une face inférieure arrondie 34 qui coopère avec l'extrémité libre 27 de l'anse 21 lors de l'assemblage de la poignée 1 par basculement sur l'anse 21. Ainsi, le recul du verrou 31 lors de l'assemblage de la poignée 1 sur l'anse 21 est automatique.

L'extrémité avant 32 du verrou 31 comporte une paroi 30 inclinée par rapport à un plan horizontal passant par l'axe longitudinal 13. La paroi 30 inclinée, sous l'action du ressort 36, exerce un effort sur l'extrémité libre 27 de l'anse 21 pour plaquer la face d'appui supérieure 26 contre la paroi d'appui inférieure 16 selon un axe perpendiculaire à l'axe longitudinal 13 dans la position d'accouplement. La paroi 30 inclinée est plane.

Le bouton de manoeuvre 33 comporte une excroissance 37 s'étendant vers le haut selon un axe perpendiculaire à l'axe longitudinal 13 et agencée au-dessus de l'extrémité avant 32 du verrou 31. L'excroissance 37 comporte une zone d'appui d'un doigt de l'utilisateur qui est sensiblement à l'aplomb de la paroi 30 inclinée selon l'axe perpendiculaire à l'axe longitudinal 13, dans le plan de coupe vertical.

Dans un premier mode de réalisation illustré aux figures 1 à 3, l'anse comporte un logement 40a agencé à proximité de l'extrémité libre 27. Le logement 40a prend la forme d'une ouverture traversante, sensiblement rectangulaire. Le logement 40a s'étend selon une direction principale perpendiculaire à la direction d'extension radiale de l'anse 21. Le logement 40a comporte une paroi arrière 44a. La paroi arrière 44a est parallèle à la face avant 24. La paroi arrière 44a du logement 40a est perpendiculaire à la face d'appui supérieure 26. La paroi arrière 44a comporte une arête 47a supérieure.

Le bec 12 comporte un bossage 50a agencé sur la face d'appui inférieure 16 et qui s'étend selon une direction principale horizontale, perpendiculaire à l'axe longitudinal 13. Le bossage 50a comporte une face arrière 54a. La face arrière 54a comporte une face plane inclinée 51a. La face plane inclinée 51a comporte des première 55a et deuxième 56a portions d'extrémité agencées de part et d'autre de l'axe longitudinal 13. Les première 55a et deuxième 56a portions d'extrémité sont destinées à coopérer avec la paroi arrière 44a du logement 40a, notamment avec l'arête 47a. La face plane inclinée 51a s'étend depuis la paroi d'appui inférieure 16 au niveau des première 55a et deuxième 56a portions d'extrémité avec un angle α1 par rapport à une direction perpendiculaire à l'axe longitudinal 13, dans un plan de coupe vertical (fig. 3). L'angle α1 est égal à 10°. Dans un plan de coupe transversal, le bossage 50a comporte une extrémité libre 53a arrondie.

Tel que visible à la figure 3, l'extrémité libre 27 de l'anse 21 comporte une arête inférieure 28 rectiligne sur laquelle la paroi 30 inclinée exerce un effort pour plaquer la face d'appui supérieure 26 contre la paroi d'appui inférieure 16 selon l'axe perpendiculaire à l'axe longitudinal 13 dans la position d'accouplement. La paroi 30 inclinée exerce un effort sur la l'arête inférieure 28 pour également maintenir le bossage 50a dans le logement 40a.

Dans ce premier mode de réalisation, la paroi 30 inclinée et l'axe longitudinal 13, dans un plan de coupe vertical, forment un angle θ de 20°. Ainsi, l'effort de rappel exercé par le ressort 36 sur le verrou 31 vers sa position d'accouplement génère sur l'arête inférieure 28 une force avec une composante verticale importante de plaquage de la face d'appui supérieure 26 de l'anse contre la paroi d'appui inférieure 16 du bec 12.

Dans un deuxième mode de réalisation illustré aux figures 4 à 6, l'anse comporte un logement 40b agencé à proximité de l'extrémité libre 27. Le logement 40b présente une forme en V (fig. 6) dans un plan de coupe transversal. Le logement 40b en forme de V comporte une ouverture supérieure 43b (fig. 6). Le logement 40b s'étend selon une direction principale perpendiculaire à la direction d'extension radiale de l'anse 21. Le logement 40b comporte une paroi arrière 44b. La paroi arrière 44b du logement 40b comporte une face plane inclinée 41b qui s'étend avec un angle β par rapport à une direction perpendiculaire à l'axe longitudinal 13. L'angle β est égal à 45°. La forme en V du logement 40b comprend une pointe arrondie 42b (fig. 6).

Le bec 12 comporte un bossage 50b agencé sur la face d'appui inférieure 16 et qui s'étend selon une direction principale horizontale, perpendiculaire à l'axe longitudinal 13. Le bossage 50b comporte une face arrière 54b. La face arrière 54b du bossage 50b s'étend depuis la paroi d'appui inférieure 16 avec un angle α2 par rapport à une direction perpendiculaire à l'axe longitudinal 13, dans un plan de coupe vertical. L'angle α2 est égal à 35°. Dans un plan de coupe transversal, le bossage 50b comporte une extrémité libre 55b arrondie reliée à la face arrière 54b. La liaison entre la face arrière 54b et l'extrémité libre 55b arrondie forme une arête 57b.

Tel que visible à la figure 6, la paroi 30 inclinée exerce un effort sur la pointe arrondie 42b agencée à l'extrémité libre 27 de l'anse pour plaquer la face d'appui supérieure 26 contre la paroi d'appui inférieure 16 selon l'axe perpendiculaire à l'axe longitudinal 13, dans la position d'accouplement. la paroi 30 inclinée exerce un effort sur la pointe arrondie 42b pour également maintenir le bossage 50b dans le logement 40b.

Dans ce deuxième mode de réalisation, la paroi 30 inclinée et l'axe longitudinal 13, dans un plan de coupe vertical, forment un angle θ de 30°. Ainsi, l'effort de rappel exercé par le ressort 36 sur le verrou 31 vers sa position d'accouplement génère sur la pointe arrondie 42b une force avec une composante verticale importante de plaquage de la face d'appui supérieure 26 de l'anse contre la paroi d'appui inférieure 16 du bec 12.

En fonctionnement dans le premier mode de réalisation, l'utilisateur saisit le corps de préhension 11 de la poignée 1 et introduit le double cambrage 18 du bec 12 dans l'ouverture 22 par le dessus. Ensuite, il fait basculer la poignée 1 autour d'un axe de pivotement 14, transversal à l'axe longitudinal 13 et compris dans le plan horizontal, et la face inférieure arrondie 34 de l'extrémité avant 32 du verrou 31 prend appui sur l'extrémité libre 27 de l'anse 21. En poursuivant le basculement de la poignée 1, le verrou 31 va reculer à l'encontre de la force de rappel du ressort 36. Le bossage 50a va pénétrer dans le logement 40a. La face plane inclinée 51a de la face arrière 54a du bossage 50a vient en appui contre l'arête 47a de la paroi arrière 44a du logement 40a pour amener l'arête avant 19 du double cambrage 18 en contact avec la paroi avant 24 de l'ouverture 22 par un léger coulissement du bec 12 sur l'anse 21. Lorsque la poignée 1 est quasiment en position assemblée sur l'anse 21, l'extrémité avant 32 du verrou 31 glisse sous la face inférieure 23 sous l'effet du ressort 36, la paroi 30 inclinée prend appui sur l'arête inférieure 28 pour plaquer l'anse 21 contre la paroi d'appui inférieure 16 du bec 12 (fig. 3).

Pour désassembler la poignée 1 de l'anse 21, l'utilisateur commande le bouton de manoeuvre 33 pour faire reculer le verrou 31 en position de désaccouplement, à l'encontre de la force de rappel du ressort 36. Lors du déplacement du verrou 31, la paroi 30 inclinée se désengage de l'arête inférieure 28. L'utilisateur peut ensuite basculer la poignée 1 pour désengager le bossage 50a du logement 40a et extraire le bec 12 de l'ouverture 22 de l'anse 21, tout en relâchant le bouton de manoeuvre 33.

Bien entendu, l'invention n'est nullement limitée aux modes de réalisation décrits et illustrés qui n'ont été donnés qu'à titre d'exemples. Des modifications restent possibles, notamment du point de vue de la constitution des divers éléments ou par substitution d'équivalents techniques, sans sortir pour autant du domaine de protection de l'invention, qui est défini dans les revendications.

Ainsi, dans une variante de réalisation non illustrée, l'anse 21 comporte deux logements agencés à proximité de l'extrémité libre 27 et le bec 12 comporte deux bossages agencés sur la face d'appui inférieure 16. Les deux bossages sont agencés de part et d'autre de l'axe longitudinal 13.

## Revendications

1. Ensemble (60) formé par un récipient de cuisson (2) comprenant au moins une anse (21) recourbée vers l'extérieur ainsi qu'une poignée (1) amovible destinée à coopérer avec ladite anse (21), ladite anse (21) comportant une extrémité libre (27) et une ouverture (22) traversante munie d'une paroi avant (24), ladite poignée (1) amovible s'étendant selon un axe longitudinal (13) et comportant à une extrémité un bec (12) se terminant par un double cambrage (18) susceptible d'être introduit dans ladite ouverture (22), ledit bec (12) étant muni d'une paroi d'appui inférieure (16) destinée à coopérer avec une face d'appui supérieure (26) de l'anse (21), l'anse (21) comportant un logement (40a, 40b) agencé à proximité de l'extrémité libre (27) et le bec (12) comportant un bossage (50a, 50b) agencé sur la face d'appui inférieure (16) et qui s'étend selon une direction principale horizontale, perpendiculaire à l'axe longitudinal (13), **caractérisé en ce que** le bossage (50a, 50b) et le logement (40a, 40b) sont dimensionnés pour amener le double cambrage (18) en contact avec la paroi avant (24) de l'ouverture (22) lorsque la poignée (1) est assemblée sur l'anse (21).

2. Ensemble (60) selon la revendication 1, **caractérisé en ce que** le bossage (50a, 50b) comporte une face arrière (54a, 54b) et le logement (40a, 40b) comporte une paroi arrière (44a, 44b), la face arrière (54a, 54b) étant en appui contre la paroi arrière (44a, 44b) lorsque la poignée (1) est assemblée sur l'anse (21), pour amener le double cambrage (18) en contact avec la paroi avant (24) de l'ouverture (22).

3. Ensemble (60) selon l'une quelconque des revendications 1 à 2, **caractérisé en ce que** le bossage (50a, 50b) comporte une extrémité libre (53a, 53b) arrondie dans un plan de coupe transversal.

4. Ensemble (60) selon l'une quelconque des revendications 1 à 3, **caractérisé en ce que** l'ouverture (22) s'étend selon une direction principale horizontale, de manière parallèle à la direction principale d'extension du logement (40a, 40b).

5. Ensemble (60) selon l'une quelconque des revendications 1 à 4, **caractérisé en ce que** le logement (40a) est formé par une ouverture traversante.

6. Ensemble (60) selon la revendication 5, **caractérisé en ce que** la face arrière (54a) du bossage (50a) comporte une face plane inclinée (51a) par rapport à une direction perpendiculaire à l'axe longitudinal (13), dans un plan de coupe vertical et la paroi arrière (44a) du logement (40a) comporte une arête (47a) qui s'étend selon une direction perpendiculaire à l'axe longitudinal (13) et contenue dans un plan horizontal, la face plane inclinée (51a) glissant sur l'arête (47a) pour amener le double cambrage (18) en contact avec la paroi avant (24) de l'ouverture (22) lorsque la poignée (1) est assemblée sur l'anse (21)

7. Ensemble (60) selon l'une quelconque des revendications 1 à 4, **caractérisé en ce que** le logement (40b) présente une forme en V dans un plan de coupe transversal, le logement (40b) en forme de V comportant une ouverture supérieure (43b) de réception du bossage (50b).

8. Ensemble (60) selon la revendication 7, **caractérisé en ce que** la paroi arrière (44b) du logement (40b) comporte une face plane inclinée (41b) par rapport à une direction perpendiculaire à l'axe longitudinal (13), dans un plan de coupe vertical et la face arrière (54b) du bossage (50b) comporte une arête (57b) qui s'étend selon une direction perpendiculaire à l'axe longitudinal (13) et contenue dans un plan horizontal, l'arête (57b) glissant sur la face plane inclinée (41b) pour amener le double cambrage (18) en contact avec la paroi avant (24) de l'ouverture (22) lorsque la poignée (1) est assemblée sur l'anse (21).

9. Ensemble (60) selon l'une quelconque des revendications 1 à 8, **caractérisé en ce que** la poignée (1) comporte un dispositif de verrouillage comprenant un verrou (31) mobile en translation suivant l'axe longitudinal (13) entre une position d'accouplement dans laquelle la poignée (1) est assemblée sur l'anse (21) et une position de désaccouplement dans laquelle la poignée (1) peut être désassemblée de l'anse (21).

10. Ensemble (60) selon la revendication 9, **caractérisé en ce que**, dans la position d'accouplement, le verrou (31) comporte une paroi (30) inclinée d'un angle θ par rapport à un plan horizontal passant par l'axe longitudinal (13), qui exerce un effort sur l'extrémité libre (27) de l'anse (21) pour plaquer la face d'appui supérieure (26) contre la paroi d'appui inférieure (16) selon une direction perpendiculaire à l'axe longitudinal (13) et pour maintenir le bossage (50a, 50b) engagé dans le logement (40a, 40b).

11. Ensemble (60) selon l'une quelconque des revendications 1 à 10, **caractérisé en ce que** le récipient de cuisson (2) est une poêle, une casserole ou une sauteuse.

## Patentansprüche

1. Anordnung (60), die von einem Kochgefäß (2) gebildet wird, das mindestens einen nach außen gebogenen Bügel (21) sowie einen abnehmbaren Griff (1) umfasst, der dazu bestimmt ist, mit dem Bügel (21) zusammenzuwirken, wobei der Bügel (21) ein freies Ende (27) und eine Durchgangsöffnung (22) umfasst, die mit einer vorderen Wand (24) ausgestattet ist, wobei sich der abnehmbare Griff (1) entlang einer Längsachse (13) erstreckt und an einem Ende eine Nase (12) umfasst, die mit einer Doppelwölbung (18) abschließt, die in die Öffnung (22) eingeführt werden kann, wobei die Nase (12) mit einer unteren Auflagewand (16) ausgestattet ist, die dazu bestimmt ist, mit einer oberen Auflageseite (26) des Bügels (21) zusammenzuwirken, wobei der Bügel (21) eine Aufnahme (40a, 40b) umfasst, die in der Nähe des freien Endes (27) angeordnet ist, und die Nase (12) einen Vorsprung (50a, 50b) umfasst, der an der unteren Auflageseite (16) angeordnet ist und der sich entlang einer horizontalen Hauptrichtung senkrecht zur Längsachse (13) erstreckt, **dadurch gekennzeichnet, dass** der Vorsprung (50a, 50b) und die Aufnahme (40a, 40b) so dimensioniert sind, dass sie die Doppelwölbung (18) mit der vorderen Wand (24) der Öffnung (22) in Kontakt bringen, wenn der Griff (1) an den Bügel (21) angebaut ist.

2. Anordnung (60) nach Anspruch 1, **dadurch gekennzeichnet, dass** der Vorsprung (50a, 50b) eine hintere Seite (54a, 54b) umfasst und die Aufnahme (40a, 40b) eine hintere Wand (44a, 44b) umfasst, wobei sich die hintere Seite (54a, 54b) an der hinteren Wand (44a, 44b) in Auflage befindet, wenn der Griff (1) an den Bügel (21) angebaut ist, um die Doppelwölbung (18) mit der vorderen Wand (24) der Öffnung (22) in Kontakt zu bringen.

3. Anordnung (60) nach einem der Ansprüche 1 bis 2, **dadurch gekennzeichnet, dass** der Vorsprung (50a, 50b) ein freies Ende (53a, 53b) umfasst, das in einer Querschnittsebene abgerundet ist.

4. Anordnung (60) nach einem der Ansprüche 1 bis 3, **dadurch gekennzeichnet, dass** sich die Öffnung (22) entlang einer horizontalen Hauptrichtung parallel zur Haupterstreckungsrichtung der Aufnahme (40a, 40b) erstreckt.

5. Anordnung (60) nach einem der Ansprüche 1 bis 4, **dadurch gekennzeichnet, dass** die Aufnahme (40a) von einer Durchgangsöffnung gebildet wird.

6. Anordnung (60) nach Anspruch 5, **dadurch gekennzeichnet, dass** die hintere Seite (54a) des Vorsprungs (50a) eine in Bezug auf eine Richtung senkrecht zur Längsachse (13) in einer vertikalen Schnittebene geneigte ebene Seite (51a) umfasst, und die hintere Wand (44a) der Aufnahme (40a) eine Kante (47a) umfasst, die sich entlang einer Richtung senkrecht zur Längsachse (13) erstreckt und in einer horizontalen Ebene enthalten ist, wobei die geneigte ebene Seite (51a) auf der Kante (47a) gleitet, um die Doppelwölbung (18) mit der vorderen Wand (24) der Öffnung (22) in Kontakt zu bringen, wenn der Griff (1) an den Bügel (21) angebaut ist.

7. Anordnung (60) nach einem der Ansprüche 1 bis 4, **dadurch gekennzeichnet, dass** die Aufnahme (40b) in einer Querschnittsebene eine V-Form aufweist, wobei die V-förmige Aufnahme (40b) eine obere Öffnung (43b) zum Aufnehmen des Vorsprungs (50b) umfasst.

8. Anordnung (60) nach Anspruch 7, **dadurch gekennzeichnet, dass** die hintere Wand (44b) der Aufnahme (40b) eine in Bezug auf eine Richtung senkrecht zur Längsachse (13) in einer vertikalen Schnittebene geneigte ebene Seite (41b) umfasst, und die hintere Seite (54b) des Vorsprungs (50b) eine Kante (57b) umfasst, die sich entlang einer Richtung senkrecht zur Längsachse (13) erstreckt und in einer horizontalen Ebene enthalten ist, wobei die Kante (57b) auf der geneigten ebenen Seite (41b) gleitet, um die Doppelwölbung (18) mit der vorderen Wand (24) der Öffnung (22) in Kontakt zu bringen, wenn der Griff (1) an den Bügel (21) angebaut ist.

9. Anordnung (60) nach einem der Ansprüche 1 bis 8, **dadurch gekennzeichnet, dass** der Griff (1) eine Verriegelungsvorrichtung umfasst, die einen Riegel (31) umfasst, der entlang der Längsachse (13) zwischen einer Kopplungsstellung, in der der Griff (1) an den Bügel (21) angebaut ist, und einer Entkopplungsstellung, in der der Griff (1) vom Bügel (21) abgebaut werden kann, verschiebebeweglich ist.

10. Anordnung (60) nach Anspruch 9, **dadurch gekennzeichnet, dass** in der Kopplungsstellung der Riegel (31) eine in Bezug auf eine durch die Längsachse (13) verlaufende horizontale Ebene um einen Winkel θ geneigte Wand (30) umfasst, die eine Kraft auf das freie Ende (27) des Bügels (21) ausübt, um die obere Auflageseite (26) entlang einer Richtung senkrecht zur Längsachse (13) an die untere Auflagewand (16) zu drücken und den Vorsprung (50a, 50b) in der Aufnahme (40a, 40b) in Eingriff zu halten.

11. Anordnung (60) nach einem der Ansprüche 1 bis 10, **dadurch gekennzeichnet, dass** das Kochgefäß (2) eine Pfanne, ein Stieltopf oder eine Schwenkpfanne ist.

## Claims

1. Assembly (60) formed by a cooking container (2) comprising at least one outwardly curved bracket (21) as well as a removable handle (1) intended to cooperate with said bracket (21), said bracket (21) comprising a free end (27) and a through-opening (22) provided with a front wall (24), said removable handle (1) extending along a longitudinal axis (13) and comprising at one end a lip (12) ending with a double cambering (18) able to be inserted into said opening (22), said lip (12) being provided with a lower bearing wall (16) intended to cooperate with an upper bearing face (26) of the bracket (21), the bracket (21) comprising a housing (40a, 40b) arranged near the free end (27) and the lip (12) comprising a boss (50a, 50b) arranged on the lower bearing surface (16) and which extends along a horizontal main direction, perpendicular to the longitudinal axis (13), **characterized in that** the boss (50a, 50b) and the housing (40a, 40b) are sized to bring the double cambering (18) into contact with the front wall (24) of the opening (22) when the handle (1) is assembled on the bracket (21).

2. Assembly (60) according to claim 1, **characterized in that** the boss (50a, 50b) comprises a rear face (54a, 54b) and the housing (40a, 40b) comprises a rear wall (44a, 44b), the rear face (54a, 54b) bearing against the rear wall (44a, 44b) when the handle (1) is assembled on the bracket (21), to bring the double cambering (18) into contact with the front wall (24) of the opening (22).

3. Assembly (60) according to any one of claims 1 to 2, **characterized in that** the boss (50a, 50b) comprises a free rounded end (53a, 53b) in a cross-sectional plane.

4. Assembly (60) according to any one of claims 1 to 3, **characterized in that** the opening (22) extends along a horizontal main direction, parallel to the main direction of extension of the housing (40a, 40b).

5. Assembly (60) according to any one of claims 1 to 4, **characterized in that** the housing (40a) is formed by a through-opening.

6. Assembly (60) according to claim 5, **characterized in that** the rear face (54a) of the boss (50a) comprises a flat face (51a) tilted with respect to a direction perpendicular to the longitudinal axis (13), in a vertical-section plane and the rear wall (44a) of the housing (40a) comprises an edge (47a) that extends along a direction perpendicular to the longitudinal axis (13) and contained in a horizontal plane, the tilted flat face (51a) sliding on the edge (47a) to bring the double cambering (18) in contact with the front wall (24) of the opening (22) when the handle (1) is assembled on the bracket (21).

7. Assembly (60) according to any one of claims 1 to 4, **characterized in that** the housing (40b) has a V shape in a cross-sectional plane, the V-shaped housing (40b) comprising an upper opening (43b) for receiving the boss (50b).

8. Assembly (60) according to claim 7, **characterized in that** the rear wall (44b) of the housing (40b) comprises a flat face (41a) tilted with respect to a direction perpendicular to the longitudinal axis (13), in a vertical-section plane and the rear face (54b) of the boss (50b) comprises an edge (57b) that extends along a direction perpendicular to the longitudinal axis (13) and contained in a horizontal plane, the edge (57b) sliding on the tilted flat face (41b) to bring the double cambering (18) in contact with the front wall (24) of the opening (22) when the handle (1) is assembled on the bracket (21).

9. Assembly (60) according to any one of claims 1 to 8, **characterized in that** the handle (1) comprises a locking device comprising a lock (31) mobile in translation along the longitudinal axis (13) between a coupling position wherein the handle (1) is assembled on the bracket (21) and an uncoupling position wherein the handle (1) can be disassembled from the bracket (21).

10. Assembly (60) according to claim 9, **characterized in that**, in the coupling position, the lock (31) comprises a wall (30) tilted by an angle θ with respect to a horizontal plane passing through the longitudinal axis (13), which exerts a force on the free end (27) of the bracket (21) to urge the upper bearing face (26) against the lower bearing wall (16) along a direction perpendicular to the longitudinal axis (13) and to maintain the boss (50a, 50b) engaged in the housing (40a, 40b).

11. Assembly (60) according to any one of claims 1 to 10, **characterized in that** the cooking container (2) is a frying pan, pot or a skillet.
